# FASCICULE DE BREVET EUROPEEN

(11) **EP 4 107 505 B1**
(45) Date de publication et mention de la délivrance du brevet: **03.09.2025**
(21) Numéro de dépôt: 21705572.2
(22) Date de dépôt: 22.02.2021
(51) Int. Cl.: G01N 1/22, G01N 1/28

(54) **DISPOSITIF DE COLLECTE PAR IMPACTION DE PARTICULES CONTENUES DANS L'AIR AMBIANT SUR UN RUBAN ADHÉSIF TRANSPARENT ET PROCÉDÉ ASSOCIÉ**
VORRICHTUNG ZUM SAMMELN VON IN DER UMGEBUNG ENTHALTENEN PARTIKELN AUF EINEM TRANSPARENTEN KLEBEBAND DURCH IMPAKTION UND ZUGEHÖRIGES VERFAHREN
DEVICE FOR COLLECTING BY IMPACTION PARTICLES CONTAINED IN AMBIENT AIR ON A TRANSPARENT ADHESIVE STRIP, AND ASSOCIATED METHOD

(30) Priorité: 21.02.2020 FR 2001730
(43) Date de publication de la demande: 28.12.2022
(73) Titulaire: Commissariat à l'Energie Atomique et aux Energies Alternatives, 75015 Paris (FR); Centre national de la recherche scientifique, 75016 Paris (FR); UNIVERSITE DE VERSAILLES-SAINT QUENTIN EN YVELINES, 78035 Versailles cedex (FR); UNIVERSITE PAUL SABATIER TOULOUSE III, 31062 Toulouse Cedex 9 (FR)
(72) Inventeur: SARDA-ESTEVE, Roland, 91191 Gif sur Yvette Cedex (FR); GUINOT, Benjamin, 38570 Theys (FR); BAISNEE, Dominique, 91191 Gif sur Yvette Cedex (FR); FILIPPI, Dominique, Marton, 4788 (NZ)
(74) Mandataire: Gevers & Orès
(86) Numéro de dépôt international: PCT/EP2021/054314
(87) Numéro de publication internationale: WO 2021/165529

(56) Documents cités:
- US-A1- 2009 027 674
- US-A1- 2016 116 405
- US-A1- 2019 293 539
- US-B1- 6 345 545

## Description

### Domaine technique de l'invention

La présente invention se rapporte au domaine des dispositifs de collecte par impaction de particules contenues dans l'air ambiant.

### Arrière-plan technique

L'impaction est un principe de collection de particules contenues dans l'air ambiant qui est largement répandu. Il consiste à aspirer, dans un logement, l'air ambiant à un débit contrôlé et fixe pour recueillir des particules sur un support. Après une campagne de collecte, on peut ainsi récupérer le support et en faire une analyse, a posteriori.

Dans le domaine considéré, de nombreux dispositifs sont déjà connus.

Ainsi, on trouve dans la littérature, des dispositifs d'impaction opérant en « cascade ».

Un exemple détaillé de conception d'un tel dispositif est présenté dans l'article de Misra & al., « Development and evaluation of a personal cascade impactor sampler (PCIS) », Aerosol Science 33 (2002), 1027-1047. Le dispositif consiste en plusieurs étages d'impaction agencés en série le long de l'écoulement du flux d'air. Les plus grosses particules, à savoir les plus massiques, comprises dans l'air ambiant impactent le premier étage. Les autres particules passent à travers ce première étage et les particules les plus grosses restantes impactent alors au niveau du deuxième étage et ainsi de suite. Les différents étages, qui définissent le principe de « cascade » permettent donc de collecter des particules de tailles variées. Un tel dispositif permet donc de connaître la taille des particules impactées à chaque étage. Pour obtenir plus d'informations, par exemple la forme des particules ou leur nature chimique, il faut alors, a posteriori et en laboratoire, effectuer des analyses dédiées.

Ainsi également, on trouve dans la littérature, des dispositifs d'impaction « en continu » autrement appelé « type HIRST ».

Un tel dispositif met en œuvre un rouleau, unique, autour duquel se trouve un ruban muni d'une face d'impaction adhésive. Le rouleau, mis en mouvement par un moteur, permet de faire défiler le ruban et en conséquence, de pouvoir faire une collection dans le temps, le plus souvent sur un ou quelques jours, et de suivre ainsi l'évolution de la concentration en particules dans un deuxième temps, en l'occurrence avec un pas de temps bi-horaire associé à une marge d'erreur importante. Ceci n'est pas possible avec un dispositif de type « impacteur en cascade » qui recueille sur une période prédéfinie un ensemble de particules, sans que l'on puisse faire une analyse d'évolution temporelle fine sur cette période. En revanche, un dispositif fonctionnant « en continu » ne comprenant qu'un seul étage, ne peut détecter des particules que dans une gamme de taille restreinte et prédéfinie par les paramètres de mise en œuvre du dispositif. En pratique, il est d'ailleurs employé pour la seule détection des pollens (taille définie dans une gamme restreinte) et vise à faire un suivi dans le temps de ces pollens. A l'issue de la campagne d'acquisition, on peut ainsi récupérer le ruban et l'analyser en laboratoire, a posteriori, pour déterminer une évolution de la concentration en pollens (allergènes) dans l'air ambiant et ainsi, prévenir les autorités de santé d'une éventuelle crise allergène à venir.

Il serait donc intéressant de pouvoir proposer un dispositif de collecte par impaction de particules contenues dans l'air ambiant permettant de collecter une large gamme de tailles de particules, ce qui impliquerait des particules de natures différentes, tout en étant apte à faire un suivi dans le temps de l'évolution de la concentration de ces particules.

En plus d'une collection d'une large gamme de tailles de particules, il serait intéressant de pouvoir accéder à leur nature physico-chimique.

Par ailleurs, il serait également intéressant de faire le suivi dans le temps de façon précise, donc notamment avec un pas de temps inférieur au pas bi-horaire d'un dispositif de type HIRST, en réduisant les erreurs sur les mesures de concentrations effectuées.

En outre, il serait également intéressant de pouvoir obtenir ces données en temps réel car les systèmes de collecte par impaction connus ne le permettent pas à ce jour. Certes, il existe des dispositifs d'analyse en temps réel de particules contenues dans l'air ambiant. Ceux-ci sont toutefois basés sur des principes radicalement différents de celui de l'impaction. Par exemple, la société PLAIR propose le dispositif dénommé RAPID-E permettant une analyse en temps réel, mais basé sur la fluorescence induite par les particules soumises à un faisceau laser. On pourra, pour plus d'informations, se référer aux documents US 2019/033191 A1 et US 2019/331601 A1. Le document US 2016/116405 A1 divulgue le préambule de la revendication 1.

### Résumé de l'invention

L'invention vise donc principalement à proposer un dispositif de collecte par impaction de particules contenues dans l'air ambiant permettant de collecter une large gamme de tailles de particules tout en étant apte à faire un suivi dans le temps de l'évolution de la concentration de ces particules.

En complément, l'invention vise également à obtenir l'un au moins des autres besoins précités.

A cet effet, l'invention propose un dispositif de collecte par impaction de particules contenues dans l'air ambiant sur un ruban adhésif selon la revendication 1.

Le dispositif selon l'invention pourra comprendre l'une au moins des caractéristiques suivantes, prises seules ou en combinaison :
- le dispositif comprend une source de lumière agencée de sorte à éclairer le ruban adhésif transparent par sa tranche ;
- en variante, la source de lumière est agencée de sorte à éclairer la face d'impaction avec un angle strictement supérieur à 0° et inférieur ou égal à 90°;
- le logement comprend un support pour le ruban adhésif transparent, ledit support étant destiné à être en contact avec une face arrière du ruban adhésif transparent, ladite face arrière étant la face parallèle et opposée à la face d'impaction ;
- le dispositif comprend une tuyère dont une extrémité, de plus petite section, définit l'orifice d'entrée d'air dans le logement ;
- le dispositif comprend un support de collecte additionnel des particules, lequel est apte à recueillir les particules non impactées sur le ruban adhésif transparent ;
- la caméra se situe à une distance comprise entre 10 µm et 100 µm de la face arrière du ruban adhésif et transparent ;
- le logement comprend des guides pour le ruban adhésif transparent, lesdits guides étant situés entre les rouleaux.

A cet effet également, l'invention propose un procédé de collecte par impaction de particules contenues dans l'air ambiant sur un ruban adhésif transparent selon la revendication 7.

Le procédé selon l'invention pourra comprendre l'une au moins des caractéristiques suivantes, prises seules ou en combinaison :
- une étape au cours de laquelle on transmet les données filmées à distance, par exemple par voie non filaire ;
- une étape au cours de laquelle on émet une lumière, par exemple dans le domaine visible, en direction d'une tranche du ruban adhésif transparent ;
- en variante, une étape au cours de laquelle on émet une lumière, par exemple dans le domaine visible, en direction de la face d'impaction avec un angle strictement supérieur à 0° et inférieur ou égal à 90° ;
- une étape au cours de laquelle on accélère, en amont de l'orifice d'entrée d'air du logement, par référence au sens d'écoulement de l'air, la vitesse de l'air ambiant aspiré dans le logement, de préférence de sorte à générer un écoulement turbulent dans l'espace formé entre ledit orifice d'entrée d'air et la face d'impaction ;
- une étape au cours de laquelle on recueille les particules contenues dans l'air n'ayant pas impactées sur la face d'impaction du ruban adhésif transparent ;
- une étape au cours de laquelle on fait varier la vitesse de défilement du ruban adhésif transparent entre les deux rouleaux ;
- une étape au cours de laquelle, à partir d'une vitesse de défilement constante, on diminue la vitesse de défilement jusqu'à la valeur nulle.

### Brève description des figures

D'autres caractéristiques et avantages de l'invention apparaitront au cours de la lecture de la description détaillée qui va suivre pour la compréhension de laquelle on se reportera aux dessins annexés et pour lesquels :
[Fig. 1] La figure 1 est un schéma en coupe d'un dispositif selon l'invention ;
[Fig. 2] La figure 2 est un schéma selon une autre vue en coupe du dispositif représenté sur la figure 1 ;
[Fig. 3] La figure 3 est une vue agrandie du dispositif selon l'invention tel que représenté sur la figure 1, au niveau d'une zone d'impaction ;
[Fig. 4] la figure 4 est une vue en perspective d'un composant du dispositif représenté sur la figure 1 ;
[Fig. 5] La figure 5 est une vue en perspective d'une variante de réalisation du composant représenté sur la figure 4 ;
[Fig. 6] La figure 6 est un schéma en coupe d'un autre dispositif selon l'invention ;
[Fig. 7] La figure 7 est un schéma représentant les étapes d'un procédé de conforme à l'invention ;
[Fig. 8] La figure 8 est une variante de réalisation du dispositif représenté sur les figures 1 ou 6, selon une vue en coupe ;
[Fig. 9] La figure 9 représente la variante de la figure 8, selon une vue de dessus ;
[Fig. 10] La figure 10 illustre une image capturée par une caméra du dispositif selon l'invention, en temps réel, avec un éclairage à 0° par rapport à la face d'impaction (éclairage de la tranche) à l'occasion d'un épisode de circulation de poussières sahariennes ;
[Fig. 11] La figure 11 illustre une image capturée par la caméra du dispositif selon l'invention, en temps réel, avec un éclairage à 0° par rapport à la face d'impaction (éclairage de la tranche) ;
[Fig. 12] La figure 12 illustre une image capturée par la caméra du dispositif selon l'invention, en temps réel, avec un éclairage à 60° par rapport à la face d'impaction ;
[Fig. 13] La figure 13 illustre une image capturée par la caméra du dispositif selon l'invention, en temps réel, avec un éclairage à 60° par rapport à la face d'impaction et une intensité lumineuse différente de celle de la Fig. 13 ;
[Fig. 14] La figure 14 est une représentation schématique du dispositif selon l'invention sur laquelle peut être observé l'agencement de la caméra et de la source d'éclairage.

### Description détaillée de l'invention

Dans toute la description qui suit, le repère (O ; X, Y, Z) définit un repère orthogonal direct.

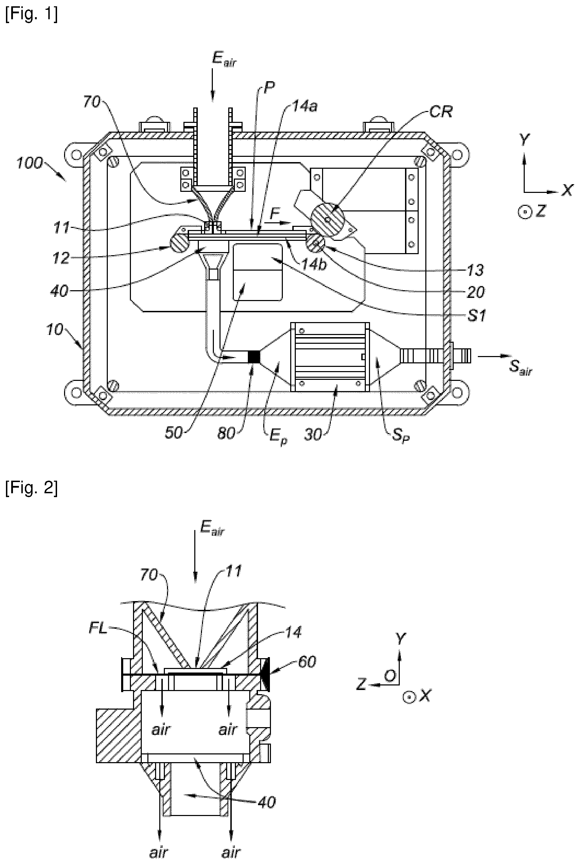

Un premier mode de réalisation de l'invention est représenté à l'appui des figures 1 à 4.

La figure 1 représente un dispositif 100 de collecte par impaction de particules contenues dans l'air ambiant sur un ruban 14 adhésif transparent, conforme à l'invention.

Le ruban 14 adhésif transparent peut être divers. Il peut par exemple s'agir de cellophane enduit de silicone. En variante, il peut s'agir d'un ruban du commerce, dit « cristal », par exemple proposé par la société 3M sous la référence XA004830560. Ce dernier est préféré, du fait de ses bonnes propriétés mécaniques et optiques (transparence).

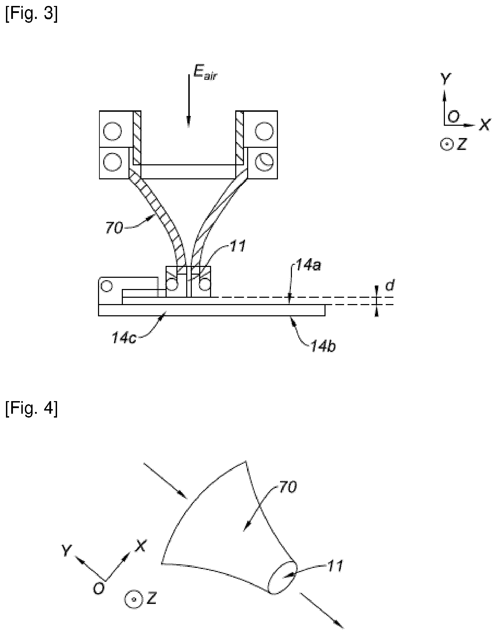

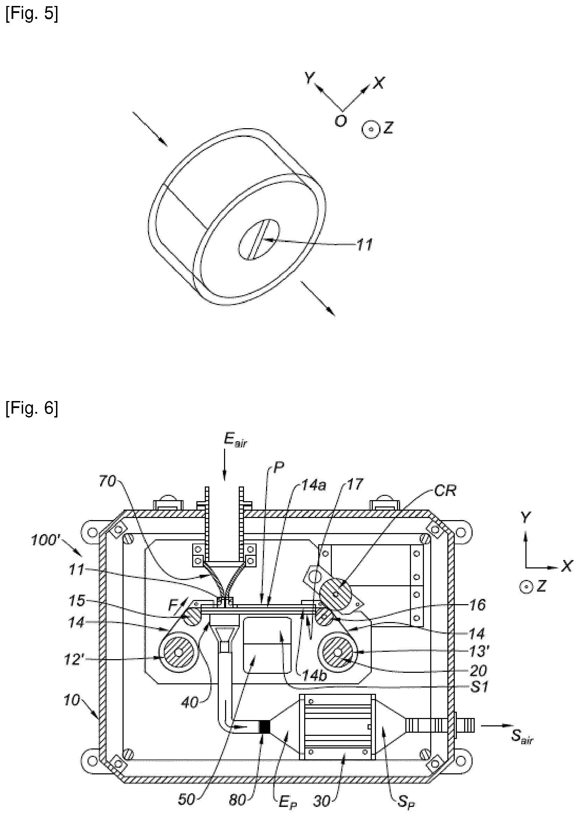

Le dispositif 100 comprend un logement 10 muni d'un orifice 11 d'entrée d'air. La section de l'orifice 11 peut présenter diverses formes. A titre d'exemple non limitatifs, cette section peut être elliptique, circulaire ou encore rectangulaire, i.e. sous la forme d'une fente. On pourra par exemple visualiser un orifice 11 circulaire sur la figure 4 (l'orifice y apparaît elliptique du fait que la figure 4 est en perspective) et un orifice 11 sous la forme d'une fente sur la figure 5. Sur les figures 4 et 5, les flèches indiquent le sens d'écoulement de l'air lorsque le dispositif 100 est en fonctionnement. Si l'on considère par exemple une fente circulaire, son diamètre est typiquement compris entre 0,3cm et 1cm. Dans le cas du dispositif 100 représenté sur la figure 1, la section de l'orifice présente une valeur prédéterminée, constante.

Le logement 10 comporte un premier rouleau 12, un deuxième rouleau 13 et le ruban 14 adhésif transparent destiné à défiler entre le premier rouleau 12 et le deuxième rouleau 13. Le sens de défilement du ruban adhésif transparent est indiqué par la flèche F. Les rouleaux 12, 13 sont agencés de sorte qu'une face adhésive 14a du ruban adhésif transparent 14, dite face d'impaction, localisée entre les rouleaux, soit située en vis-à-vis de l'orifice 11. Par ce biais, l'air ambiant (extérieur au dispositif 100) entre dans le logement 10 à travers la section de l'orifice 11 et vient impacter la face d'impaction 14a du ruban 14 adhésif transparent avec un flux sensiblement perpendiculaire à la face d'impaction 14a. On notera que la distance d (prise selon la direction principale d'écoulement de l'air, axe Y) entre l'orifice 11 d'entrée d'air et la face d'impaction 14a est typiquement comprise entre 0,5mm et 1mm.

Le logement 10 comprend également un moteur 20 pour mettre en rotation les rouleaux 12, 13. Le moteur 20 est commandé par un contrôleur 50, ce dernier étant donc configuré pour envoyer une commande au moteur 20 et ainsi faire défiler le ruban adhésif transparent 14 entre les rouleaux 12, 13.

D'un point de vue pratique, on peut relier le moteur 20 au deuxième rouleau 13, alors destiné à recevoir le ruban 14 adhésif transparent, le premier rouleau 12 étant alors celui qui, en début d'une campagne de mesure, contient le ruban 14 adhésif transparent. L'entraînement du deuxième rouleau 13 par le moteur 20 implique dans ce cas, le déroulement du ruban 14 adhésif transparent du premier rouleau 12. En variante, il est aussi envisageable de faire en sorte que le moteur 20 entraîne les deux rouleaux 12, 13. Un tel entraînement, de fait synchronisé pour les deux rouleaux 12, 13 limite le risque de déformation de la partie P de ruban 14 adhésif transparent compris entre les rouleaux 12, 13, ce qui ne peut qu'être bénéfique pour la qualité du recueillement, par impaction, des particules que l'air est susceptible de contenir.

L'intérêt de faire défiler le ruban 14 adhésif transparent tient dans le fait que l'on peut suivre l'évolution, au cours de la campagne d'essais, du nombre de particules collectées par impaction. Si par exemple, une campagne d'essais est prévue sur une durée totale d'une semaine, pour détecter tout particulièrement des pollens, l'impaction à un moment donné donne une information de la situation à ce moment donné, information qui peut alors être suivie au cours du temps. En particulier, si on détecte, avec une vitesse de défilement constante du ruban 14 adhésif transparent, une quantité de plus en plus importante de pollens collectés, alors on peut en déduire, en temps réel, une crise allergique probable à venir.

Avantageusement, un contre-rouleau CR, amovible, est prévu pour exercer une pression sur le ruban 14 adhésif transparent contre le rouleau 13 recevant le ruban 14. Cela facilite le bon enroulement du ruban 14 adhésif transparent autour du rouleau 13. Avantageusement également, le contre-rouleau CR peut comprendre un outil d'impression (non visible) pour horodater le ruban 14 adhésif transparent. Ainsi, lorsque l'on récupère le ruban 14 adhésif transparent après une campagne de mesure, on peut associer aux particules collectées à un endroit de la face 14a d'impaction, une date et une heure précises de collection. En variante à l'outil d'impression, on peut prévoir d'autres moyens remplissant la même fonction d'horodatage, par exemple un laser agencé pour permettre une gravure de la face 14a d'impaction du ruban 14 adhésif transparent. Le contre-rouleau CR peut également être relié au moteur 20, mais ceci n'a rien d'obligatoire.

Le logement 10 comprend aussi une pompe 30 pour générer, à travers l'orifice 11 d'entrée d'air, un débit d'entrée d'air contrôlé en direction de la face d'impaction 14a du ruban adhésif transparent 14. On a noté Eₐᵢᵣ la prise d'air à l'extérieur du logement 10 et on a noté Sₐᵢᵣ la sortie d'air à l'extérieur du logement 10.

Dans une méthode d'impaction, la section de l'orifice 11 d'entrée d'air étant connue, la commande de la pompe 30 permet de contrôler le débit d'air à travers la section de l'orifice 11, et donc la vitesse de l'écoulement d'air à travers l'orifice 11, laquelle correspond sensiblement à la vitesse d'impaction sur la face d'impaction 14a du ruban 14 adhésif transparent.

La commande de la pompe 30 est assurée par le contrôleur 50. Le contrôleur 50 est donc configuré pour commander la pompe 30 de sorte que la pompe 30 génère un débit d'entrée d'air contrôlé.

Le contrôleur 50 est par ailleurs configuré pour que la pompe 30 génère un débit d'air variable.

Ceci procure de grands avantages.

En effet, lorsque la pompe 30 fonctionne, le flux d'air issu de l'orifice 11 se dirige vers la face d'impaction 14a. Cependant, cette face d'impaction 14 constitue un obstacle sur le chemin du flux d'air, imposant certaines conditions aux limites à ce flux d'air. Une partie du flux d'air s'approchant de la face d'impaction 14a est donc déviée et avec lui, certaines particules que l'air contient. Ainsi, pour un débit d'air donné (débit 1), les particules les plus massiques, du fait de leur inertie, sont moins susceptibles d'être déviées. Elles impactent donc plus aisément. Au contraire, les particules les moins massiques, du fait de leur moindre inertie, sont plus déviées si bien que certaines d'entre elles peuvent ne pas impacter sur la face d'impaction 14a. Ainsi, si l'on souhaite collecter les particules les plus massiques seulement, il est d'intérêt de mettre en œuvre un débit d'air faible. Dans ce cas, les particules les moins massiques ne sont pas collectées. On peut ainsi, pendant un laps de temps donné au cours de la campagne de mesures, s'intéresser plus particulièrement à ce type de particules (les plus massiques), étant rappelé en particulier que le ruban 14 adhésif transparent peut défiler entre les rouleaux 12, 13 pendant ce laps de temps.

Au contraire, si l'on souhaite collecter les particules les moins massiques, il convient alors d'augmenter le débit d'air (débit 2). Bien entendu, dans ce dernier cas, les particules les plus massiques impacteront également, mais la variation de débit d'air alors appliquée (passage du débit 1 au débit 2, plus élevé) permet alors de collecter les particules les plus massiques au centre de la face d'impaction 14a et de collecter les particules les moins massiques sur les bords de la face d'impaction 14a. On peut ainsi collecter, de manière exploitable pour l'analyse à en faire, des particules de masses différentes (et donc en pratique de nature et de tailles très différentes : pollens, suies, etc...) sur des zones distinctes de la face adhésive 14a.

En outre, en augmentant encore le débit d'air (débit 3), il est même possible d'effectuer une collection exploitable pour l'analyse à en faire des seules particules les moins massiques. En effet, il est possible de régler le débit d'air pour faire en sorte que plusieurs familles de particules, parmi les plus massiques, impactent au centre, sans qu'une différenciation ne soit alors possible entre elles, tout en permettant l'impaction des particules les moins massiques sur les bords du ruban adhésif transparent. Cela assure ainsi une bonne différenciation parmi les différentes familles de particules contenues dans l'air ambiant prélevé qui font parties des moins massiques. Dans ce cas, on peut également collecter, de façon exploitable et pendant un laps de temps donné, seulement les particules les moins massiques.

En définitive, le fait que le débit d'air passant par l'orifice 11 d'entrée d'air puisse être modifié, sous la commande du contrôleur 50, permet, en particulier en combinaison avec le fait que le ruban 14 adhésif transparent défile entre les rouleaux 12, 13, de collecter de manière exploitable une large gamme de particules. En effet, le contrôle du débit d'air permet de contrôler la vitesse au niveau de l'orifice d'entrée d'air (la section est constante), cette vitesse étant un paramètre caractéristique de l'impaction.

La variation du débit d'air par une commande du contrôleur 50 sur la pompe 30 est particulièrement simple à mettre en œuvre.

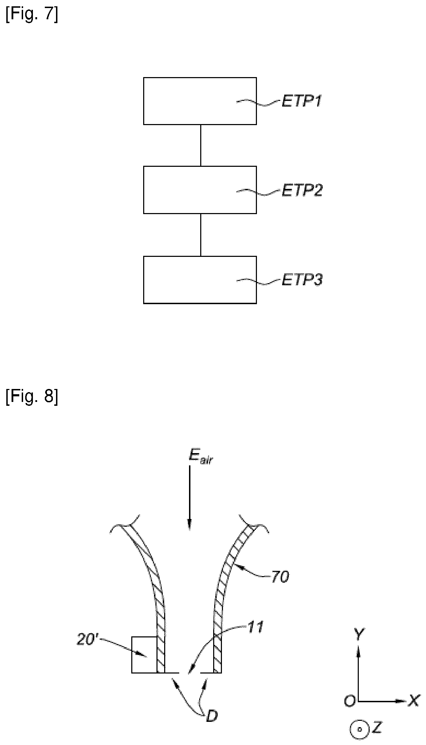

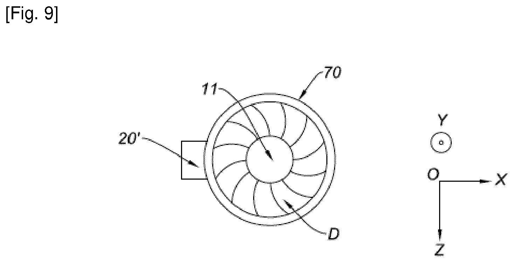

Toutefois, on pourrait, dans une variante de réalisation, faire en sorte que l'orifice 11 d'entrée d'air présente une section variable. Ceci peut s'effectuer avec un dispositif D configuré pour faire varier la section de l'orifice 11 d'entrée, relié à un moteur 20'. Dans ce cas, le contrôleur 50 agit sur le moteur 20' pour faire varier la section de l'orifice 11 d'entrée d'air, et donc pour un débit d'air donné, la vitesse à travers 11 l'orifice d'entrée d'air. Cette variante est représentée, selon une vue en coupe, sur la figure 8 et selon une vue de dessus, sur la figure 9 dans le cas d'un orifice circulaire 11. Ici, le dispositif D peut notamment se présenter sous la forme d'un iris. Ce qui est représenté sur ces figures s'insère alors parfaitement dans le dispositif 100. La forme précise du dispositif D dépendra notamment de la forme de l'orifice. Ainsi, dans le cas d'une fente, rectangulaire, on peut prévoir que le dispositif D se présente sous la forme de deux plaques coulissantes chacune à partir de l'un de deux côtés opposés de la fente. Dans tous les cas, cette solution, impliquant une pièce mécanique en mouvement n'est pas la plus avantageuse, notamment du fait d'un risque de colmatage accru, ou encore des pertes de charges singulières impliquées par cette conception.

Selon une autre variante, correspondant à une association des deux variantes décrites précédemment, on pourra prévoir une solution dans laquelle on met à la fois en œuvre le dispositif D et son moteur 20', avec un contrôleur configuré pour commander à la fois la pompe 30 et le moteur 20'.

Le moteur 20 peut être configuré pour assurer un défilement à vitesse constante (démarrage et arrêt du moteur 20 en début et fin de campagne de mesure mis à part) du ruban 14 adhésif transparent, sous la commande du contrôleur 50. La vitesse de défilement du ruban dépendra grandement de la concentration constatée en particules. Néanmoins et typiquement, celle-ci sera généralement de quelques millimètres par heure, et excédera rarement 10 mm/h, voire 8 mm/h.

Toutefois, on peut prévoir que le contrôleur 50 envoie une commande d'arrêt au moteur 20 pendant la campagne de mesure (par exemple, avec une information de type rampe, de la vitesse de défilement à la valeur nulle). Une fois le moteur 20 arrêté, le ruban 14 adhésif transparent ne défile plus, pendant le temps d'arrêt du moteur 20. Cela permet d'obtenir une information sur la concentration de particules dans l'air ambiant, de manière aisée puisqu'une mesure optique d'absorbance à travers le ruban 14 adhésif transparent est suffisante. On notera cependant que cette information peut également être obtenue lorsque le ruban 14 adhésif transparent défile, mais pas aussi directement.

En effet, connaissant le débit d'air imprimé par la pompe 30 à travers l'orifice 11 d'entrée d'air, et le laps de temps pendant lequel le moteur 20 est à l'arrêt, on détermine aisément le volume d'air prélevé (VAP). Un comptage (N) des particules impactées peut par ailleurs être effectué, soit après la campagne de mesures ou, en temps réel, pendant la campagne de mesures. La concentration en particules impactées peut alors être obtenue aisément en faisant le rapport du comptage (N) effectué sur le volume d'air prélevé (VAP).

Le contrôleur 50 peut ensuite envoyer une nouvelle commande au moteur 20 pour qu'il se mette à nouveau à tourner (par exemple, avec une information de type rampe, de la valeur nulle à la vitesse de défilement souhaitée).

Il est possible de prévoir un support 17, plan, pour la partie P du ruban 14 adhésif transparent qui est située entre les rouleaux 12, 13. Le support 17 évite que la partie P de ruban 14 adhésif transparent présente entre les deux rouleaux 12, 13 ne se déforme. Ceci ne peut qu'améliorer la qualité de la collection de particules qui est effectuée sur la face d'impaction 14a du ruban 14 adhésif transparent. En effet, si les rouleaux 12, 13 remplissent déjà une fonction de mise sous tension de la partie P de ruban adhésif transparent située entre les rouleaux 12, 13, le support 17, plan, permet de limiter encore plus les risques d'avoir une face d'impaction 14a non plane. Dans ce cas, il est avantageux de prévoir un support 17 réalisé en un matériau aux propriétés pas ou peu électrostatiques, par exemple en verre ou en plexiglas^{®}. Ceci évite ou du moins limite le risque que le ruban 14 adhésif transparent adhère au support 17. De ce fait, on évite ou limite le risque que la partie P de ruban 14 adhésif transparent présente entre les deux rouleaux 12, 13 ne se déforme, ce qui ne peut qu'améliorer la qualité de la collection de particules qui est effectuée au niveau de la face d'impaction 14a.

Le dispositif 100 comprend avantageusement une tuyère 70 dont une extrémité, de plus petite section, définit l'orifice 11 d'entrée d'air dans le logement 10. Une telle tuyère 70 permet notamment d'accélérer l'air aspiré depuis l'extérieur Eₐᵢᵣ du dispositif 100, par la pompe 30, jusqu'au niveau de la face d'impaction 14a du ruban 14 adhésif transparent. On pourra notamment se référer à la figure 4 représentant la tuyère 70 mise en œuvre dans le dispositif 100 des figures 1 à 3, à l'extrémité de laquelle se situe un orifice 11 circulaire.

Comme représenté sur les figures annexées, le dispositif 100 peut aussi comporter un support 80 de collecte additionnel des particules. Le support 80 de collecte additionnel a pour fonction de recueillir les particules non impactées sur le ruban 14 adhésif transparent. A cet effet, on peut utiliser une membrane montée de manière amovible, en aval du ruban 14 adhésif transparent, en référence au parcours de l'air dans le logement 10. Cette membrane 80 peut alors être analysée a posteriori. Cette membrane 80 peut être installée à plusieurs endroits, par exemple en entrée E_{P} de la pompe 30, comme cela est représenté sur la figure 1. On peut aussi, au niveau de la sortie de la pompe S_{P}, prévoir une dérivation (cas non représenté sur les figures annexées) menant à la membrane.

Le dispositif 100 comporte en outre une caméra 40 pour filmer une face arrière 14b du ruban adhésif transparent 14, ladite face arrière 14b étant la face parallèle et opposée à la face d'impaction 14a. Dans ce cas, et en présence du support 17, on comprend que le support 17 doit en outre être transparent. En effet, la caméra 40 se situe alors derrière le support 17, à l'opposé de la face d'impaction 14a.

Une telle configuration permet de collecter les particules sans perte sur le ruban 14 adhésif et transparent en comparaison à une configuration où la caméra 40 serait disposée pour filmer la face d'impaction 14a du ruban adhésif transparent 14. En effet, dans cette dernière configuration, la caméra 40 serait nécessairement un obstacle pour l'écoulement du flux d'air et celui-ci serait obligé de la contourner. Or, le contournement de la caméra 40 filtre nécessairement les particules collectées sur la face d'impaction 14a puisque seules les particules les plus légères sont alors capables d'atteindre ladite face d'impaction 14a. En disposant la caméra 40 pour qu'elle filme la face arrière 14b, il est possible de collecter les particules de toutes tailles, et donc de collecter sans perte.

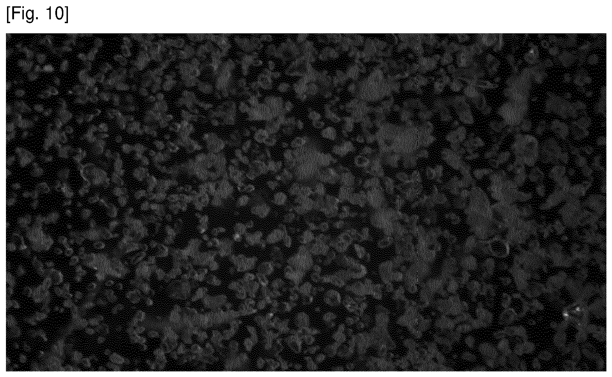

Une telle configuration permet en outre de filmer et donc détecter les particules déposées sur le ruban 14 en temps réel. Cela permet de calculer un indice de saturation, correspondant à la concentration totale, ce qui permet d'asservir le débit d'entrée généré par la pompe 30 et/ou la vitesse de déroulement du ruban 14 adhésif transparent et améliorer la séparation et l'identification des particules collectées. La figure 10 illustre une image capturée par la caméra 40 montrant le nombre important de poussières sahariennes détectées dans la couche limite à Grenoble à instant donné. On comprend bien l'importance d'avoir recours à une détection en temps réel pour contrôler le nombre de particules déposées sur le ruban 14 en temps réel.

La caméra 40 peut présenter un autofocus.

Elle peut, en outre ou en variante, être montée sur des rails (non représentés). Les rails sont alors agencés pour autoriser un déplacement de la caméra 40 selon une direction perpendiculaire au plan défini par la face arrière 14b (ou la face d'impaction 14, cela revient au même) du ruban 14 adhésif transparent. Le déplacement de la caméra 40 sur rails permet de réaliser une fonction similaire, ou additionnelle, à celle d'un autofocus.

Avantageusement, lorsque la caméra 40 filme la face arrière 14b, opposée et parallèle à la face d'impaction 14a, la caméra 40 se situe à une distance comprise entre 10 µm et 100 µm du ruban 14 adhésif et transparent. Cela permet d'améliorer la netteté des images acquises, indépendamment de tout autofocus, sans gêner la collection des particules sur le ruban 14 adhésif et transparent.

Lorsque la caméra 40 est prévue, le contrôleur 50 est alors configuré pour analyser et traiter les données fournies par la caméra 40, pour effectuer des analyses en temps réel. La caméra 40 est plus généralement contrôlée par le contrôleur 50 et par ailleurs, le contrôleur 50 commande, en fonction des données fournies par la caméra 40, le moteur 20 (et/ou selon le cas le moteur 20' pour faire varier la section de l'orifice d'entrée d'air) et la pompe 30 pour respectivement adapter la vitesse de défilement du ruban 14 adhésif transparent et le débit d'air aspiré par l'orifice 11 d'entrée d'air.

On peut aussi, en variante, prévoir que les images fournies par la caméra 40 soient transmises à distance (par exemple par voire non filaire), pour qu'une analyse de ces données soit effectuée par un ordinateur distant (non représenté), en temps réel également.

On peut encore prévoir, que les images issues de la caméra 40 soient stockées dans une mémoire 51 du dispositif 100. Les données de la mémoire 51 peuvent alors être récupérées, a posteriori, à savoir après la compagne de mesures, soit pour faire une analyse a posteriori, ou bien pour vérifier, toujours a posteriori, une analyse qui aurait été effectuée en temps réel par le contrôleur 50 du dispositif ou, selon le cas, par l'ordinateur distant précité.

En référence à la figure 2, on note que le logement 10 peut également comprendre une source 60 de lumière agencée de sorte à éclairer le ruban 14 adhésif transparent par sa tranche 14c (la tranche 14c est référencée en figure 3). La tranche 14c définit une face de côté du ruban 14 adhésif transparent, sensiblement plane et à la fois sensiblement perpendiculaire à la face d'impaction 14a et à la face arrière 14b du ruban 14 adhésif transparent. L'éclairage de la tranche 14c du ruban 14 adhésif transparent permet de capturer des images sur fond noir avec la caméra 40. En effet, comme cela a été mentionné précédemment, la caméra 40 filme la face arrière 14b qui est opposée et parallèle à la face d'impaction 14a. L'éclairage de la tranche 14c s'effectue donc avec un angle de 0° (angle nul) par rapport à la face d'impaction 14a. La présence d'un fond noir dans les images capturées dérive de cet éclairage à 0° par la source 60 de lumière. Une telle configuration permet de faire ressortir les objets lumineux absorbants ou réfléchissants et permet donc de faciliter la reconnaissance de particules biologiques, absorbantes par nature, et des particules non biologiques, plus réfléchissantes. En outre, cela permet également de mettre en évidence les volumes et les structures internes des particules collectées, par exemple l'existence de sphères ou encore de lignes conductrices.

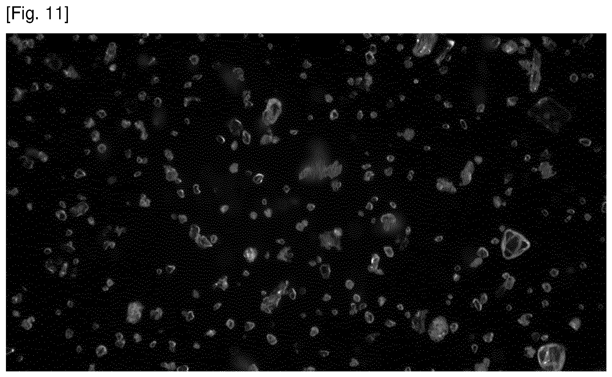

La figure 11 illustre une image capturée par la caméra 40 dans la configuration précitée. Parmi les particules collectées, il peut être observé des pollens de différentes tailles. Les tailles sont déterminées par calibration au moyen de sphères inorganiques de tailles connues (1µm, 10µm, 30µm, 40µm) et de conversions pixels/taille.

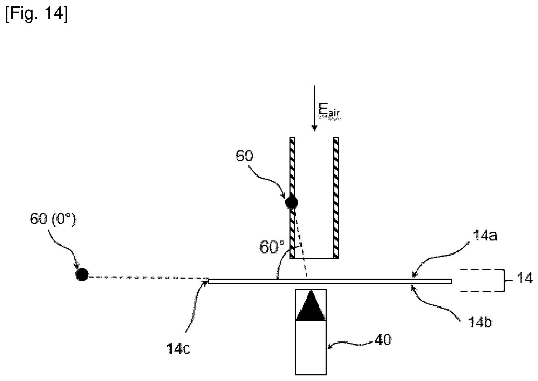

En variante, la source 60 de lumière est agencée de sorte à éclairer la face d'impaction 14a avec un angle strictement supérieur à 0° (angle non nul) et inférieur ou égal à 90°. Ceci est par exemple illustré à la figure 14, où l'angle est de 60° par rapport à la face d'impaction. Autrement dit, dans cette configuration, la source 60 de lumière est positionnée de manière à éclairer le ruban 14 adhésif et transparent avec un angle strictement supérieur à 90° et inférieur ou égal à 180° par rapport à un axe de détection de la caméra, la caméra 40 filmant la face arrière 14b qui est opposée et parallèle à la face d'impaction 14a. Une telle configuration permet de faciliter la reconnaissance des objets sombres et permet donc de faire ressortir les objets très absorbants tels que les suies et les poussières crustales. En outre, cela permet de mettre en évidence les objets transparents tels que les sels de mer et les silicates tout en accentuant les contours de formes internes et externes.

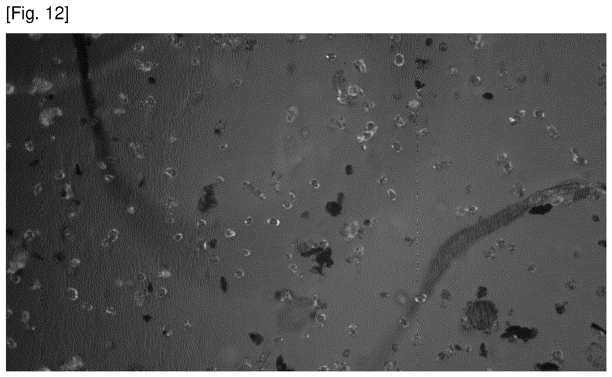

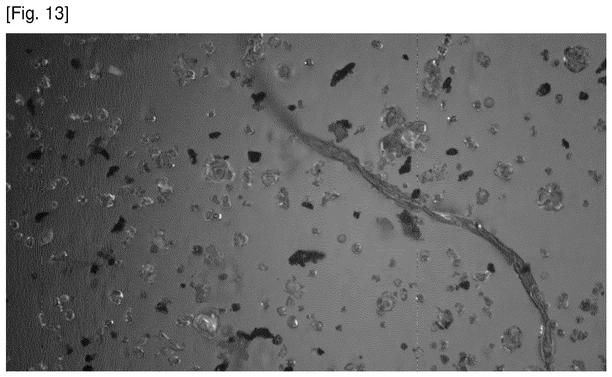

Les figures 12 et 13 illustrent des images capturées par la caméra 40 dans une configuration où l'éclairage s'effectue avec un angle de 60° par rapport à la face d'impaction 14a. Il est à noter que la figure 13 diffère de la figure 12 par l'intensité lumineuse de la source 60. Sur ces deux figures, il est possible de distinguer la présence de moisissures bien définies, de chapelets de suie (noir) et la structure interne de pollens.

Dans la configuration de la figure 11 comme dans celle des figures 12 et 13, il est possible de de mettre en évidence les propriétés optiques intrinsèques des particules telles que l'absorption, la diffusion, la réflexion, la granularité, les structures externe et interne, le degré de transparence, les effets de bords, etc. Lors de la mise en œuvre du procédé selon l'invention, on prendra soin de ne pas modifier la couleur du support 17 entre les mesures pour qu'elles soient comparables.

La source de lumière 60 peut être une source de lumière blanche (domaine visible), donc polychromatique. On a représenté le faisceau lumineux FL issu de la diode 60 lorsque celle-ci est en fonctionnement. On notera aussi au passage que le flux d'air n'impactant pas sur le ruban 14 adhésif transparent et passant donc autour de celui-ci a été représenté sur la figure 2.

Un exemple de source 60 de lumière adéquate est une diode, telle que celle qui est représentée, en coupe, sur la figure 2. En variante, on pourrait prévoir un autre type de source de lumière, par exemple, en lieu et place de la diode 60, une lampe à incandescence ou une lampe au Xénon, avantageusement fibrée. Une lampe au Xénon est particulièrement puissante, ce qui permet, notamment en présence de particules biologiques, de mettre à profit, à savoir d'amplifier, la fluorescence qu'elles génèrent.

On peut aussi prévoir une source de lumière monochromatique, susceptible de fonctionner dans le domaine visible, le proche infrarouge ou l'ultraviolet lorsque l'on souhaite cibler certains types de particules. Par exemple, dans le domaine du visible, si l'on souhaite mieux visualiser des pollens qui auraient été collectés, une source de lumière fonctionnant aux environs de 520nm (vert) est particulièrement intéressante, car cette longueur d'onde n'est pas ou peu absorbée par les pollens. On peut également utiliser la fluorescence naturelle des bioparticules pour distinguer celles qui contienne des chloroplastes ou non. De manière similaire, si l'on souhaite mieux visualiser des particules de carbone (issues notamment de produits de combustion du fuel ou du feu de bois), une source de lumière fonctionnant à 880nm est particulièrement bien adaptée (proche infrarouge). Selon un dernier exemple, si l'on souhaite mieux visualiser des poussières qui auraient été collectées par le ruban 14 adhésif transparent, leurs dimensions typiques impliquent un fonctionnement à une longueur d'onde généralement au plus de 320nm (pour bénéficier au mieux de la diffusion impliquée par ces poussières).

La transparence du ruban 14 adhésif transparent dépendra grandement de l'application envisagée. Toutefois, on comprend que généralement le ruban 14 adhésif transparent sera transparent dans le domaine visible, et avantageusement également dans le proche infrarouge et/ou le proche ultraviolet.

Un deuxième mode de réalisation de l'invention est représenté sur la figure 6.

Sur cette figure 6, le dispositif 100' comporte, en plus des rouleaux 12', 13', des guides 15, 16 pour le ruban 14 adhésif transparent, avantageusement chacun de section à la fois arrondie et plus faible que la section d'un rouleau 12', 13'. Les guides 15, 16 sont situés entre les rouleaux 12', 13'.

Il est en effet utile de prévoir, pour effectuer une campagne d'essais sur du long terme, une longueur de ruban 14 adhésif transparent relativement importante. De ce fait, un rouleau 12', 13' autour duquel est enroulé l'essentiel de l'adhésif présente un certain diamètre et donc un encombrement non négligeable. Dans un tel cas, il est utile d'agencer les rouleaux 12', 13', non pas à proximité de la face d'impaction 14a du ruban 14 adhésif transparent (comme c'est le cas sur la figure 1), mais plus loin et ce, pour des raisons d'encombrement. Les guides 15, 16 viennent alors se positionner en lieu et place des rouleaux 12, 13 de la variante décrite précédemment à l'appui de la figure 1.

Ces guides 15, 16 permettent alors d'assurer une bonne tenue mécanique du ruban 14 adhésif transparent en assurant une certaine tension selon l'axe longitudinal du ruban 14. En effet, dans ce cas, le ruban 14 adhésif transparent et donc la face d'impaction 14a restent tendus et plans.

Avantageusement, les guides 15, 16 sont réalisés en un matériau aux propriétés pas ou peu électrostatiques, par exemple en verre ou en plexiglas^{®}. Ceci évite ou du moins limite le risque que le ruban 14 adhésif transparent 14 adhère aux guides 15, 16. De ce fait, on évite ou limite le risque que la partie de ruban 14 adhésif transparent présente entre les deux guides 15, 16 ne se déforme, ce qui ne peut qu'améliorer la qualité de la collection de particules qui est effectuée.

On notera par ailleurs que les guides peuvent être montés sur des roulements (non représentés) pour mieux accompagner le défilement du ruban 14 adhésif transparent.

Tout le reste, pour le dispositif 100' représenté sur la figure 6, est identique à ce qui a été décrit précédemment à l'appui des figures 1 à 4, étant aussi mentionné que le composant illustré sur la figure 5 peut être également mis en œuvre en lieu et place de la tuyère 70 dans le dispositif 100'.

L'obtention des données peut s'effectuer en temps réel, grâce à la présence de la caméra 40. En effet, celle-ci peut filmer le ruban 14 adhésif transparent, en particulier sous l'effet de la lumière procurée par la source 60 de lumière pour obtenir de nombreuses informations.

Ainsi, il est possible de connaître, en temps réel, la taille des particules ayant impacté (dimensions globales, facteurs de forme), Pour cela, il suffit d'injecter dans le flux d'air, par exemple, en amont de l'orifice 11 d'entrée d'air, des billes (souvent en latex) de dimensions calibrées et connues. Ces billes impactent alors sur la face 14a d'impaction du ruban 14 adhésif transparent et leur détection par la caméra 40 permet une comparaison avec les autres particules ayant impacté et provenant de l'air ambiant. D'un point de vue pratique, le contrôleur 50 recueille alors les images fournies par la caméra 40, comptabilise le nombre de pixels d'une image représentant une bille calibrée, ce qui permet de faire un lien entre la dimension d'un pixel et la taille réelle d'une bille calibrée. Ensuite, le comptage de pixels, sur l'image considérée, pour toutes les autres particules permet d'accéder à la taille et au facteur de forme de ces autres particules.

Une fois ces informations connues, on peut alors calculer des concentrations, pour chaque type de particules, comme cela a été expliqué précédemment.

Ainsi également, il est aussi possible de connaître, en temps réel, la couleur des particules ayant impacté. Ces informations, ajoutées à celles de la taille des particules permettent de déterminer la nature des particules visualisées (biologique, non biologique et leur nature plus précise dans ces deux classes).

Par ailleurs, cette analyse en temps réel est d'intérêt pour, par exemple, adapter la vitesse de défilement du ruban 4 adhésif transparent. Ainsi, si l'on constate une concentration trop importante (voire une saturation) de certaines particules sur la face 14a d'impaction, on peut avoir un intérêt à augmenter la vitesse de défilement du ruban 14 adhésif transparent.

Dans le cadre de l'invention, il convient de noter que la taille des particules et leur nature chimique peut aussi être obtenue a posteriori, à savoir après la campagne de mesures. Néanmoins, comme on l'aura compris, l'analyse de ces données en temps réel, par le contrôleur 50, est particulièrement avantageux.

L'invention concerne également un procédé de collecte par impaction de particules contenues dans l'air ambiant sur un ruban 14 adhésif transparent. Ce procédé peut être mis en œuvre quelle que soit la variante de réalisation du dispositif 100, 100' considérée et les avantages décrits précédemment s'appliquent bien entendu aux étapes de procédé susceptibles d'être mises en œuvre.

On pourra se référer à la figure 7.

Ainsi, le procédé comprend les étapes suivantes :
- aspirer (ETP1), à travers l'orifice 11 d'entrée d'air du logement 10, l'air ambiant à un débit d'entrée d'air contrôlé ;
- faire défiler (ETP2) le ruban 14 adhésif transparent entre les deux rouleaux 12, 12' ; 13, 13' appartenant au logement 10, de sorte que la face 14a d'impaction du ruban 14 adhésif transparent défile devant l'orifice 11, l'air étant ainsi dirigé vers la face d'impaction du ruban adhésif transparent ;
- faire varier (ETP3), de manière contrôlée, le débit d'entrée d'air à travers l'orifice 11 d'entrée d'air.

Ce procédé pourra notamment mettre à profit le fait que la variation, de manière contrôlée du débit d'air, est réalisée par l'intermédiaire d'un contrôleur configuré pour commander la pompe 30 afin que cette dernière produise un débit variable. La variation du débit implique une variation de la vitesse (section de l'orifice constante), qui, comme précisé précédemment, est un paramètre caractéristique de l'impaction. Ainsi et par exemple, plus cette vitesse augmente et plus on aura de particules légères, de petites tailles, sur la face d'impaction.

Ce procédé pourra, en complément ou en variante, mettre à profit un moteur 20' agissant sur un dispositif D apte à faire varier la section de l'orifice 11 d'entrée d'air. Ainsi pour un débit fourni par la pompe 30 qui est constant, la vitesse d'entrée d'air, laquelle est considérée au niveau de l'orifice 11 d'entrée d'air, peut varier du fait du changement de section de l'orifice.

Une autre façon de faire serait de faire varier, toujours de manière contrôlée, la distance entre l'orifice d'entrée d'air et la face d'impaction du ruban (autre paramètre d'impaction, par application des critères de similitude). L'effet serait équivalent à celui consistant à faire varier la vitesse au niveau de l'orifice d'entrée d'air.

Le procédé comprend une étape au cours de laquelle on filme le ruban adhésif transparent par une face arrière 14b dudit ruban 14 adhésif transparent, ladite face arrière 14b étant la face parallèle et opposée à la face d'impaction 14a. Lorsqu'un support 17 est prévu entre le face arrière 14b et la caméra 40, le support 17 est alors transparent.

Le procédé comprend une étape au cours de laquelle on analyse, avec un contrôleur, en temps réel, les données filmées. Le contrôleur 50 peut notamment être celui prévu dans le dispositif 100, 100'. Cette étape peut notamment être suivie d'une étape de commande de la vitesse de défilement du ruban 14 adhésif transparent.

Le procédé peut comprendre une étape au cours de laquelle on transmet les données filmées à distance, par exemple par voie non filaire. Dans ce cas, l'analyse des données fournies par la caméra 40 peut s'effectuer par un ordinateur distant.

Lors du procédé, on peut prévoir une étape au cours de laquelle on émet une lumière, par exemple dans le domaine visible, en direction d'une tranche 14c du ruban 14 adhésif transparent. Cet éclairage par la tranche 14 du ruban 14 adhésif transparent a pour effet de permettre une meilleure diffusion de la lumière au sein du ruban 14 et donc d'assurer une meilleure visibilité par la caméra 40.

On peut prévoir une étape au cours de laquelle on accélère, en amont de l'orifice 11 d'entrée d'air du logement 10, par référence au sens d'écoulement de l'air, la vitesse de l'air ambiant aspiré dans le logement, de préférence de sorte à générer un écoulement turbulent dans l'espace formé entre ledit orifice 11 d'entrée d'air et la face 14 d'impaction.

On peut aussi prévoir une étape au cours de laquelle on recueille les particules contenues dans l'air n'ayant pas impacté sur la face 14a d'impaction du ruban 14 adhésif transparent. En effet, les zones situées de part et d'autre du ruban, en référence à la largeur du ruban adhésif transparent, forment des espaces libres à travers lesquels le flux d'air est apte à circuler. Les particules n'ayant pas impacté peuvent alors être collectées par la pompe 3, si celle-ci est par exemple munie d'un réservoir de récupération, ou tout dispositif de collecte approprié. Il convient de noter en particulier que lorsque la caméra 40 est très proche de la face arrière 14b, i.e. à une distance comprise entre 10 µm et 100 µm, l'espace formé entre la caméra 40 et la face arrière 14b ne constitue pas un chemin naturel de circulation pour le flux d'air qui, après avoir contourné le ruban 14 adhésif transparent, contourne la caméra 40. La caméra 40 n'est donc pas une source de pertes de particules.

On peut encore faire varier une vitesse de défilement du ruban 14 adhésif transparent entre les deux rouleaux 12, 12', 13, 13'. En particulier, à partir d'une vitesse de défilement constante, on peut diminuer la vitesse de défilement jusqu'à la valeur nulle. Lorsque le ruban est à l'arrêt, il est alors possible d'effectuer des mesures de concentration particulièrement aisées de certaines particules. Cela peut en effet s'effectuer par une mesure d'absorbance.

### Exemple d'application :

Avec l'un quelconque des dispositifs 100, 100' décrit précédemment, on peut prévoir les paramètres suivants :
- Orifice 11 d'entrée d'air circulaire, de section 14mm² (soit un diamètre d'orifice légèrement supérieur à 0,4cm) ;
- Distance d entre l'orifice 11 d'entrée d'air et la face 14a d'impaction de 0,7mm ;
- Le débit d'entrée d'air, par la section de l'orifice 11, est de 10 l/mn ;
Dans ce cas, on collecte par impaction des particules dont la taille est comprise entre 1 micron et 100 microns.

En prenant les mêmes paramètres, et en doublant seulement le débit (donc en passant à 20 l/mn), on peut alors également collecter des particules dont les dimensions sont comprises entre 800 nm et 1 micron.

## Revendications

1. Dispositif (100, 100') de collecte par impaction de particules contenues dans l'air ambiant sur un ruban (14) adhésif transparent, le dispositif comprenant :
- un logement (10) muni d'un orifice (11) d'entrée d'air, ledit logement (10) comportant un premier rouleau (12, 12'), un deuxième rouleau (13, 13') et le ruban (14) adhésif transparent monté entre les rouleaux (12, 12' ; 13, 13'), lesdits rouleaux (12, 12' ; 13, 13') étant par ailleurs agencés de sorte qu'une face adhésive (14a) du ruban (14) adhésif transparent, dite face d'impaction, puisse défiler devant l'orifice (11) ;
- un premier moteur (20) pour mettre en rotation les rouleaux (12, 12' ; 13, 13');
- au moins une pompe (30) pour générer, à travers l'orifice (11) d'entrée d'air, un débit d'entrée d'air en direction de la face (14a) d'impaction du ruban (14) adhésif transparent, et/ou un dispositif (D) configuré pour faire varier de façon contrôlée une section de l'orifice (11) d'entrée d'air, ledit dispositif (D) étant relié à un deuxième moteur (20') ;
- un contrôleur (50) pour commander le premier moteur (20) pour mettre en rotation les rouleaux et ainsi faire défiler le ruban (14) adhésif transparent entre lesdits rouleaux et pour commander, selon le cas, l'un au moins de la pompe (30) de sorte que la pompe génère un débit d'entrée d'air contrôlé et variable ou du deuxième moteur (20') relié au dispositif (D) configuré pour faire varier de façon contrôlée la section de l'orifice (11) d'entrée d'air ; et
- une caméra (40) pour filmer une face arrière (14b) du ruban (14) adhésif transparent, ladite face arrière (14b) étant la face parallèle et opposée à la face d'impaction (14a),
dans lequel le contrôleur (50) est configuré pour analyser et traiter les données fournies par la caméra (40), pour effectuer des analyses en temps réel, la caméra (40) étant contrôlée par le contrôleur (50),
**caractérisé en ce que**
le contrôleur (50) est configuré, en fonction des données fournies par la caméra (40), pour commander le premier moteur (20) et/ou, selon le cas, le deuxième moteur (20') ou l'un au moins de la pompe (30) pour respectivement adapter la vitesse de défilement du ruban (14) à adhésif transparent et le débit d'air aspiré par l'orifice (11) d'entrée d'air.

2. Dispositif (100, 100') selon la revendication 1, **caractérisé en ce qu'**il comprend une source (60) de lumière agencée de sorte à éclairer le ruban (14) adhésif transparent par sa tranche (14c).

3. Dispositif (100, 100') selon l'une des revendications précédentes, **caractérisé en ce que** le logement (10) comprend un support (17) pour le ruban (14) adhésif transparent, ledit support (17) étant destiné à être en contact avec une face arrière (14b) du ruban (14) adhésif transparent, ladite face arrière (14b) étant la face parallèle et opposée à la face d'impaction (14a).

4. Dispositif (100, 100') selon l'une des revendications précédentes, **caractérisé en ce qu'**il comprend une tuyère (70) dont une extrémité, de plus petite section, définit l'orifice (11) d'entrée d'air dans le logement (10).

5. Dispositif (100, 100') selon l'une des revendications précédentes, **caractérisé en ce qu'**il comprend un support (80) de collecte additionnel des particules, lequel est apte à recueillir les particules non impactées sur le ruban (14) adhésif transparent.

6. Dispositif (100') selon l'une des revendications précédentes, **caractérisé en ce que** le logement (10) comprend des guides (15, 16) pour le ruban (14) adhésif transparent, lesdits guides (15, 16) étant situés entre les rouleaux (12', 13').

7. Procédé de collecte par impaction de particules contenues dans l'air ambiant sur un ruban adhésif transparent (14), avec le dispositif (100, 100') selon l'une des revendications précédentes, ledit procédé comprenant les étapes suivantes :
- aspirer, à travers l'orifice (11) d'entrée d'air du logement (10), l'air ambiant à un débit d'entrée d'air contrôlé ;
- faire défiler le ruban (14) adhésif transparent entre les deux rouleaux (12, 12' ; 13, 13') appartenant au logement (10), de sorte que la face (14a) d'impaction, défile devant l'orifice, l'air étant ainsi dirigé vers la face d'impaction du ruban adhésif transparent ;
- faire varier, de manière contrôlée, le débit d'entrée d'air à travers l'orifice (11) d'entrée d'air et/ou faire varier, de manière contrôlée, la section de l'orifice (11) d'entrée d'air,
- filmer le ruban adhésif transparent par une face arrière (14b) dudit ruban (14) adhésif transparent, ladite face arrière (14b) étant la face parallèle et opposée à la face d'impaction (14a),
- analyser, en temps réel, les données filmées avec le contrôleur, et
- adapter la vitesse de défilement du ruban adhésif transparent et/ou le débit d'air aspiré par l'orifice d'entrée d'air.

8. Procédé selon la revendication 7, **caractérisé en ce qu'**il comprend une étape au cours de laquelle on transmet les données filmées à distance, par exemple par voie non filaire.

9. Procédé selon l'une des revendications 7 ou 8, **caractérisé en ce qu'**il comprend une étape au cours de laquelle on émet une lumière, par exemple dans le domaine visible, en direction d'une tranche (14c) du ruban (14) adhésif transparent.

10. Procédé selon l'une des revendications 7 à 9, **caractérisé en ce qu'**il comprend une étape au cours de laquelle on accélère, en amont de l'orifice (11) d'entrée d'air du logement (10), par référence au sens d'écoulement de l'air, la vitesse de l'air ambiant aspiré dans le logement, de préférence de sorte à générer un écoulement turbulent dans l'espace formé entre ledit orifice (11) d'entrée d'air et la face (14) d'impaction.

11. Procédé selon l'une des revendications 7 à 10, **caractérisé en ce qu'**il comprend une étape au cours de laquelle on recueille les particules contenues dans l'air n'ayant pas impactées sur la face (14a) d'impaction du ruban (14) adhésif transparent.

12. Procédé selon l'une des revendications 7 à 11, **caractérisé en ce qu'**il comprend une étape au cours de laquelle, à partir d'une vitesse de défilement constante, on diminue la vitesse de défilement jusqu'à la valeur nulle.

## Patentansprüche

1. Vorrichtung (100, 100') zum Sammeln durch Impaktion von in der Umgebungsluft enthaltenen Partikeln auf einem transparenten Klebeband (14), wobei die Vorrichtung umfasst:
- ein Gehäuse (10), das mit einer Lufteintrittsöffnung (11) versehen ist, wobei das Gehäuse (10) eine erste Walze (12, 12') und eine zweite Walze (13, 13') und das transparente Klebeband (14) umfasst, das zwischen den Walzen (12, 12'; 13, 13') angebracht ist, wobei die Walzen (12, 12'; 13, 13') außerdem so angeordnet sind, dass eine Klebeseite (14a) des transparenten Klebebands (14), die sogenannte Impaktionsfläche, vor der Öffnung (11) vorbeilaufen kann;
- einen ersten Motor (20) zum Versetzen der Walzen (12, 12'; 13, 13') in Drehung;
- mindestens eine Pumpe (30) zum Erzeugen, durch die Lufteintrittsöffnung (11), eines Lufteintrittsdurchsatzes in Richtung der Impaktionsfläche (14a) des transparenten Klebestreifens (14) und/oder eine Vorrichtung (D), die konfiguriert ist, um einen Querschnitt der Lufteintrittsöffnung (11) auf kontrollierte Weise zu verändern, wobei die Vorrichtung (D) mit einem zweiten Motor (20') verbunden ist;
- eine Steuerung (50) zum Steuern des ersten Motors (20), um die Walzen in Drehung zu versetzen und somit das transparente Klebeband (14) zwischen den Walzen vorbeilaufen zu lassen, und zum Steuern, gegebenenfalls, mindestens einer der Pumpe (30), so dass die Pumpe einen kontrollierten und variablen Lufteintrittsdurchsatz erzeugt, oder des zweiten Motors (20'), der mit der Vorrichtung (D) verbunden ist, konfiguriert, um den Querschnitt der Lufteintrittsöffnung (11) auf kontrollierte Weise zu verändern; und
- eine Kamera (40) zum Filmen einer Rückseite (14b) des transparenten Klebebands (14), wobei die Rückseite (14b) die parallele und der Impaktionsfläche (14a) gegenüberliegende Fläche ist,
wobei die Steuerung (50) konfiguriert ist, um die von der Kamera (40) gelieferten Daten zu analysieren und zu verarbeiten, um Echtzeitanalysen durchzuführen, wobei die Kamera (40) von der Steuerung (50) gesteuert wird, **dadurch gekennzeichnet, dass** die Steuerung (50) konfiguriert ist, in Abhängigkeit der von der Kamera (40) gelieferten Daten den ersten Motor (20) und/oder, gegebenenfalls, den zweiten Motor (20') oder mindestens eine der Pumpe (30) zu steuern, um die Durchlaufgeschwindigkeit des transparenten Klebebands (14) bzw. den durch die Lufteinlassöffnung (11) angesaugten Luftdurchsatz anzupassen.

2. Vorrichtung (100, 100') nach Anspruch 1, **dadurch gekennzeichnet, dass** sie eine Lichtquelle (60) umfasst, die so angeordnet ist, dass sie das transparente Klebeband (14) an seiner Schnittkante (14c) beleuchtet.

3. Vorrichtung (100, 100') nach einem der vorstehenden Ansprüche, **dadurch gekennzeichnet, dass** das Gehäuse (10) einen Träger (17) für das transparente Klebeband (14) umfasst, wobei der Träger (17) dazu bestimmt ist, mit einer Rückseite (14b) des transparenten Klebebands (14) in Kontakt zu kommen, wobei die Rückseite (14b) die zur Impaktionsfläche (14a) parallele und dieser gegenüberliegende Fläche ist.

4. Vorrichtung (100, 100') nach einem der vorstehenden Ansprüche, **dadurch gekennzeichnet, dass** sie eine Düse (70) umfasst, deren eines Ende mit kleinerem Querschnitt die Lufteintrittsöffnung (11) in das Gehäuse (10) bildet.

5. Vorrichtung (100, 100') nach einem der vorstehenden Ansprüche, **dadurch gekennzeichnet, dass** sie einen zusätzlichen Partikelsammelträger (80) umfasst, der dazu geeignet ist, die nicht auf das transparente Klebeband (14) auftreffenden Partikel zu sammeln.

6. Vorrichtung (100') nach einem der vorstehenden Ansprüche, **dadurch gekennzeichnet, dass** das Gehäuse (10) Führungen (15, 16) für das transparente Klebeband (14) umfasst, wobei die Führungen (15, 16) zwischen den Walzen (12', 13') angeordnet sind.

7. Verfahren zum Sammeln durch Impaktion von in der Umgebungsluft enthaltenen Partikeln auf einem transparenten Klebeband (14) mit der Vorrichtung (100, 100') nach einem der vorstehenden Ansprüche, wobei das Verfahren die folgenden Schritte umfasst:
- Ansaugen der Umgebungsluft durch die Lufteintrittsöffnung (11) des Gehäuses (10) mit einem kontrollierten Lufteintrittsdurchsatz;
- Vorbeilaufenlassen des transparenten Klebebands (14) zwischen den beiden zum Gehäuse (10) gehörenden Walzen (12, 12'; 13, 13'), so dass die Impaktionsfläche (14a) vor der Öffnung vorbeiläuft, wobei die Luft somit zur Impaktionsfläche des transparenten Klebebands geleitet wird;
- Verändern auf kontrollierte Weise des Lufteintrittsdurchsatzes durch die Lufteintrittsöffnung (11) und/oder Verändern auf kontrollierte Weise des Querschnitts der Lufteintrittsöffnung (11),
- Filmen des transparenten Klebebands von einer Rückseite (14b) des transparenten Klebebands (14), wobei die Rückseite (14b) die parallele und der Impaktionsfläche (14a) gegenüberliegende Fläche ist,
- Analysieren der mit der Steuerung gefilmten Daten in Echtzeit, und
- Anpassen der Geschwindigkeit des Durchlaufs des transparenten Klebebands und/oder des durch die Lufteintrittsöffnung angesaugten Luftdurchsatzes.

8. Verfahren nach Anspruch 7, **dadurch gekennzeichnet, dass** es einen Schritt umfasst, in dem die gefilmten Daten aus der Ferne, beispielsweise drahtlos, übertragen werden.

9. Verfahren nach einem der Ansprüche 7 oder 8, **dadurch gekennzeichnet, dass** es einen Schritt umfasst, bei dem ein Licht, beispielsweise im sichtbaren Bereich, in Richtung einer Schnittkante (14c) des transparenten Klebebands (14) emittiert wird.

10. Verfahren nach einem der Ansprüche 7 bis 9, **dadurch gekennzeichnet, dass** es einen Schritt umfasst, bei dem stromaufwärts der Lufteintrittsöffnung (11) des Gehäuses (10), unter Bezug auf die Strömungsrichtung der Luft, die Geschwindigkeit der in das Gehäuse angesaugten Umgebungsluft beschleunigt wird, vorzugsweise so, dass eine turbulente Strömung in dem zwischen der Lufteintrittsöffnung (11) und der Impaktionsfläche (14) gebildeten Raum erzeugt wird.

11. Verfahren nach einem der Ansprüche 7 bis 10, **dadurch gekennzeichnet, dass** es einen Schritt umfasst, bei dem die in der Luft enthaltenen Partikel, die nicht auf die Impaktionsfläche (14a) des transparenten Klebebands (14) aufgeprallt sind, gesammelt werden.

12. Verfahren nach einem der Ansprüche 7 bis 11, **dadurch gekennzeichnet, dass** es einen Schritt umfasst, in dem ausgehend von einer konstanten Durchlaufgeschwindigkeit die Durchlaufgeschwindigkeit auf den Wert Null verringert wird.

## Claims

1. A device (100, 100') for collecting by impaction particles contained in ambient air on a transparent adhesive strip (14), the device comprising:
- a housing (10) provided with an air inlet orifice (11), said housing (10) comprising a first roller (12, 12') and a second roller (13, 13') and the transparent adhesive strip (14) mounted between the rollers (12, 12'; 13, 13'), said rollers (12, 12'; 13, 13') also being arranged so that an adhesive face (14a) of the transparent adhesive strip (14), known as the impaction face, can pass in front of the orifice (11);
- a first motor (20) for rotating the rollers (12, 12'; 13, 13');
- at least one pump (30) for generating, through the air inlet orifice (11), an air inlet flow rate toward the impaction face (14a) of the transparent adhesive strip (14), and/or a device (D) configured to vary, in a controlled way, a section of the air inlet orifice (11), said device (D) being connected to a second motor (20');
- a controller (50) for controlling the first motor (20) to rotate the rollers and thus feed the transparent adhesive strip (14) between said rollers and for controlling, as appropriate, at least one of the pump (30) so that the pump generates a controlled and variable air inlet flow or the second motor (20') connected to the device (D) configured to vary, in a controlled way, the section of the air inlet orifice (11); and
- a camera (40) for filming a rear face (14b) of the transparent adhesive strip (14), said rear face (14b) being the face parallel and opposite to the impaction face (14a),
wherein the controller (50) is configured to analyze and process the data provided by the camera (40) to perform real-time analyses, the camera (40) being controlled by the controller (50), **characterized in that** the controller (50) is configured, based on the data provided by the camera (40), to control the first motor (20) and/or, as appropriate, the second motor (20') or at least one of the pump (30) to respectively adapt the speed of the transparent adhesive strip (14) and the air flow rate sucked in through the air inlet orifice (11).

2. The device (100, 100') according to claim 1, **characterized in that** it comprises a light source (60) arranged so as to illuminate the transparent adhesive strip (14) through its edge (14c).

3. The device (100, 100') according to one of the preceding claims, **characterized in that** the housing (10) comprises a support (17) for the transparent adhesive strip (14), said support (17) being intended to be in contact with a rear face (14b) of the transparent adhesive strip (14), said rear face (14b) being the face parallel and opposite to the impaction face (14a).

4. The device (100, 100') according to one of the preceding claims, **characterized in that** it comprises a nozzle (70), one end of which, of smaller cross-section, defines the air inlet orifice (11) in the housing (10).

5. The device (100, 100') according to one of the preceding claims, **characterized in that** it comprises an additional particle collection support (80) which is capable of collecting particles that have not impacted on the transparent adhesive strip (14).

6. The device (100') according to one of the preceding claims, **characterized in that** the housing (10) comprises guides (15, 16) for the transparent adhesive strip (14), said guides (15, 16) being located between the rollers (12', 13').

7. A method for collecting by impaction particles contained in ambient air on a transparent adhesive strip (14), using the device (100, 100') according to one of the preceding claims, said method comprising the following steps of:
- suctioning ambient air through the air inlet orifice (11) of the housing (10) at a controlled air inlet flow rate;
- passing the transparent adhesive strip (14) between the two rollers (12, 12'; 13, 13') belonging to the housing (10) so that the impaction face (14a) passes in front of the orifice, the air thus being directed towards the impaction face of the transparent adhesive strip;
- varying, in a controlled way, the air inlet flow rate through the air inlet orifice (11) and/or varying, in a controlled way, the section of the air inlet orifice (11),
- filming the transparent adhesive strip with a rear face (14b) of said transparent adhesive strip (14), said rear face (14b) being the face parallel and opposite to the impaction face (14a),
- analyzing, in real time, the data filmed with the controller, and
- adjusting the speed of the transparent adhesive strip and/or the air flow rate sucked in through the air inlet orifice.

8. The method according to claim 7, **characterized in that** it comprises a step in which the filmed data is transmitted remotely, for example by wireless means.

9. The method according to one of claims 7 or 8, **characterized in that** it comprises a step in which light, for example in the visible range, is emitted toward a section (14c) of the transparent adhesive strip (14).

10. The method according to one of claims 7 to 9, **characterized in that** it comprises a step in which, upstream of the air inlet orifice (11) of the housing (10), with reference to the direction of air flow, the speed of the ambient air sucked into the housing, preferably so as to generate a turbulent flow in the space formed between said air inlet orifice (11) and the impaction face (14).

11. The method according to one of claims 7 to 10, **characterized in that** it comprises a step in which the particles contained in the air that have not impacted the impaction face (14a) of the transparent adhesive strip (14) are collected.

12. The method according to one of claims 7 to 11, **characterized in that** it comprises a step in which, starting from a constant frame rate, the frame rate is reduced to zero.
